(19) Europäisches Patentamt
European Patent Office
Office européen des brevets

(11) Veröffentlichungsnummer: **0 142 701**
**B1**

(12) # EUROPÄISCHE PATENTSCHRIFT

(45) Veröffentlichungstag der Patentschrift: **04.01.89**

(51) Int. Cl.⁴: **C 08 G 18/42**, C 08 G 18/80, C 08 G 18/78, C 09 D 3/72

(21) Anmeldenummer: **84112307.8**

(22) Anmeldetag: **12.10.84**

(54) **Verwendung von Lacken auf Basis von hydroxylgruppenhaltigen verzweigten Polyestern als steinschlagschutzschicht zwischen Grundierung und Decklackierung.**

(30) Priorität: **14.10.83 DE 3337394**

(43) Veröffentlichungstag der Anmeldung: **29.05.85 Patentblatt 85/22**

(45) Bekanntmachung des Hinweises auf die Patenterteilung: **04.01.89 Patentblatt 89/1**

(84) Benannte Vertragsstaaten: **AT BE DE FR GB IT NL SE**

(56) Entgegenhaltungen:
**EP-A-0 005 033**
**DE-B-2 639 491**
**FR-A-2 345 429**
**US-A-3 806 160**
**US-A-3 888 908**

**Die Akte enthält technische Angaben, die nach dem Eingang der Anmeldung eingereicht wurden und die nicht in dieser Patentschrift enthalten sind.**

(73) Patentinhaber: **Herberts Gesellschaft mit beschränkter Haftung, Christbusch 25, D-5600 Wuppertal 2 (DE)**

(72) Erfinder: **Heinrich, Siegfried, Ing.- grad., Augusta-Strasse 84, D-5600 Wuppertal 1 (DE)**
Erfinder: **Heitzmann, Rudolf, Dr. Dipl.- Chem., Wald- Strasse 7, D-7803 Gundelfingen (DE)**
Erfinder: **Shafik, Ahmed, Dr. Dipl.- Chem., Im Vogelholz 46 A, D-5600 Wuppertal 21 (DE)**

(74) Vertreter: **Türk, Gille, Hrabal, Bruckner Strasse 20, D-4000 Düsseldorf 13 (DE)**

**EP 0 142 701 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft die Verwendung eines Pigmente, Füllstoffe, organische Lösungsmittel, sowie übliche Lackzusatzstoffe und als Bindemittel ein Gemisch aus filmbildenden, hydroxylgruppenhaltigen verzweigten Polyestern, die erhältlich sind aus Benzolcarbonsäuren sowie aliphatischen und/oder cycloaliphatischen Dicarbonsäuren, gegebenenfalls im Gemisch mit Monocarbonsäuren, sowie aliphatischen und/oder cycloaliphatischen Polyolen mit 2 bis 4 Hydroxylgruppen pro Molekül, wobei die Polyester eine mittlere Hydroxylfunktionalität von 2,5 bis 6, einen Hydroxylgehalt von 2 bis 6 Gew.-%, und einen Gehalt an aliphatischen Gruppen, die mindestens 4 bis 20 Kohlenstoffatome in einer unverzweigten Kette enthalten, von 15 bis 50 Gew.-% (Aliphaten-Gehalt) aufweisen, und wobei das Gewichtsverhältnis von dem Gehalt an diesen im Polyester vorliegenden aliphatischen Gruppen zu dem Gehalt an im Polyester vorliegenden Bonzolringen, gerechnet als Summe des Gewichts der Kohlenstoffatome der Benzolringe und der an diese Kohlenstoffatome gebundenen Wasserstoffatome (Aromaten-Gehalt), 1 bis 2,5 beträgt, und mit Acetessigäurealkylester, deren Alkylgruppen Methyl-, Ethyl-, n-Propyl-, i-Propyl-, n-Butyl-, i-Butyl- oder sec.-Butylgruppen sind, blockierten aliphatischen und/oder cycloaliphatischen Polyisocyanaten mit einer durchschnittlichen Funktionalität von mindestens 2,5 enthaltenden Lacks zur Herstellung einer Steinschlagschutzschicht mit einer Trockenfilmschichtdicke von 15 bis 50 µm zwischen der üblichen Grundierung und der Farb-Decklackierung.

Bei der Herstellung von Mehrschichtlackierungen von Kraftfahrzeugekarosserie-Oberteilen gewinnt eine ausreichende Steinschlagschutzschicht und/oder Füllerschicht zunehemnde Bedeutung, da die Karosserien aus aerodynamischen nehmende Bedeutung, da die Karosserien aus aerodynamischen Gründen weniger steile Frontpartien besitzen und deshalb größere Bereiche der Karosserie Steinschlag während der Fahrt ausgesetzt sind. Hinzu kommt, daß im Winter bei Glätte zunehmend mit Steinsplitt gestreut wird anstelle von Salz. Die Steinschlagschutz- und/oder Füllerschichten sind zwischen der üblichen Grundierung und der Farb-Decklackierung angeordnet, wobei letztere aus einer oder mehreren Schichten bestehen kann.

Steinschlagschutzschicht ist grundsätzlich eine Lackschicht, welche zusätzlich zum üblichen Lackaufbau (Grundierung/Decklack) aufgebracht wird. Sie kann dickschichtig, wie in der EP-A-59 962, oder dünnschichtig appliziert werden.

Steinschlagschutzschichten, welche dikckschichtig appliziert werden, unterscheiden sich in der Chemie ihrer Bindemittel (meist geblockte polyetheraltige Isocyanate, aminvernetzend) von den dünnschichtigen Steinschlagschutzschichten (OH-funktionelle Copolymerisate, z. B. Polyester ect., vernetzt über geblockte Polyisocyanate). Während die dickschichtigen Systeme gummielastische Filme ergeben, sind die dünnschichtigen Systeme wesentlich härter eingestellt, jedoch im Gegensatz zu herkömmlichen Lackschichten zäh-elastisch und somit nicht schleifbar.

Appliziert man die dickschichtigen Systeme dünnschichtig, ist wegen der sehr weichen Struktur kaum noch eine steinschlagschützende Wirkung vorhanden. Appliziert man dünnschichtige Systeme dickschichtig, erhält man wegen der höheren Härte keine gummielastischen Schichten, jedoch Filmststörungen wie Kocher, Blasen, usw..

Beide Arten von Steinschlagschutzschichten werden üblicherweise (meist naß-in-naß) mit einem Füller überzogen, so daß man glatte, schleifbare Oberflächen erhält.

Füller gehören bei der Automobilserienlackierung zum Stand der Technik und sollen glatte Oberflächen erzeugen, indem sie Unebenheiten des Untergrundes ausgleichen (hoher Füllstoffgehalt). Zusätzlich müssen Füller relativ harte Filme liefern, damit eine Naßschleifbarkeit mit 400er - 600er Papier gewährleistet ist, ohne daß das Schleifpapier mit Schleifschlamm zusetzt. Die Füller des Standes der Technik enthalten als Bindemittel Alkyd(Polyester)harze, Aminharze und evtl. Epoxiharze. Solche Bindemittel liefern harte, jedoch nicht sehr flexible Lackfilme, so daß eine steinschlagschützende Wirkung nur eingeschränkt vorhanden ist. Aus diesem Grunde besteht der Wunsch der Automobilindustrie nach einer zusätzlichen Steinschlagschutzschicht, wobei die Schleifbarkeit durch den darüberliegenden Füller erreicht wird.

Nachteilig dabei ist, daß eine zusätzliche Lackschicht aufgebracht werden muß (erhöhte Materialkosten, zusätzlicher Arbeitsgang). Optimal wäre eine Lackschicht, welche sowohl gute steinschlagschützende Wirkung als auch Füllereigenschaften (glatte Oberfläche, Schleifbarkeit etc.) besitzt, so daß auf den klassischen Füller verzichtet werden kann.

Aus der DE-A-3 140 834 ist eine Mehrschichtlackierung bekannt, gemäß der zwischen der Grundierung und der Decklackierung eine Zwischenschicht auf Basis eines in organischen Lösungsmitteln oder Wasser gelösten, gegebenenfalls durch partielle Veresterung mit Monoalkoholen und/oder ungesättigten Kohlenwasserstoffharzen modifizierten und/oder hydrolysierten Maleinsäureanhydridadduktes an Dienpolymerisate aufgebracht ist. Derartige Bindemittel erfordern jedcch hohe Einbrenntemperaturen von etwa 180 bis 200°C während mindestens etwa 15 Minuten. Es besteht ein großes Bedürfnis nach niedrigen Einbrenntemperaturen, möglichst unter 140°C.

Aus der EP-A-59 962 ist eine Steinschlagschutzschicht für Kraftfahrzeuge bekannt, dessen Bindemittel ein lagerstabiles Gemisch aus bestimmten Aminen mit einem Vorpolymerisat mit einem durchschnittlichen Molekulargewicht von 500 bis 15 000 ist, das durchschnittlich 2 bis 6 ketoximblockierte NCO-Gruppen enthält, die über cycloaliphatische und/oder aliphatische Gruppen am Vorpolymer gebunden sind.

Ähnliche Bindemittelformulierungen sind beschrieben in DE-A-2 131 299 und DE-A-3 108 861. Mit diesen Bindemitteln werden Steinschlagschutzschichten mit ausgezeichneten Eigenschaften erhalten, jedoch ist die Verwendung der dort eingesetzten eine aus arbeitshygienischen Gründen nicht erwünscht.

Der Erfindung liegt die Aufgabe zugrunde, einen Steinschlagschutzschicht-Lack zu finden, der bei niedrigen Einbrenntemperaturen von z. B. schon 120°C eingebrannt werden kann und der eine ausgeprägte Lagerstabilität auch bei Temperaturen über 25°C besitzt. Außerdem sollen mit diesem Lack geringe Schichtdicken von weniger als 50 µm erzielt werden, die dennoch Steinschlagschutzschicht einen gegenüber Steinschlag äußerst unempfindlichen Film ergeben. Weiterhin sollen bei dem Lack auch schwer dispergierbare Pigmente eingesetzt werden können.

Es wurde nun gefunden, daß diese Aufgabenstellung in überraschend einfacher Weise gelöst werden kann, wenn als Bindemittel für den Steinschlagschutzschicht-Lack ein lagerstabiles Gemisch aus bestimmten filmbildenden, hydroxylgruppenhaltigen Polyestern mit bestimmten blockierten Isocyanaten verwendet wird.

Gegenstand der Erfindung ist demgemäß die Verwendung eines Pigmente, Füllstoffe, organische Lösungsmittel, sowie übliche Lackzusatzstoffe und als Bindemittel ein Gemisch aus filmbildenden, hydroxylgruppenhaltigen verzweigten Polyestern, die erhältlich sind aus Benzolcarbonsäuren sowie aliphatischen und/oder cycloaliphatischen Dicarbonsäuren, gegebenenfalls im Gemisch mit Monocarbonsäuren, sowie aliphatischen und/oder cycloaliphatischen Polyolen mit 2 bis 4 Hydroxylgruppen pro Molekül, wobei die Polyester eine mittlere Hydroxylfunktionalität von 2,5 bis 6, einen Hydroxylgehalt von 2 bis 6 Gew.-%, und einen Gehalt an aliphatischen Gruppen, die mindestens 4 bis 20 Kohlenstoffatome in einer unverzweigten Kette enthalten, von 15 bis 50 Gew.-% (Aliphaten-Gehalt) aufweisen, und wobei das Gewichtsverhältnis von dem Gehalt an diesen im Polyester vorliegenden aliphatischen Gruppen zu dem Gehalt an im Polyester vorliegenden Benzolringen, gerechnet als Summe des Gewichts der Kohlenstoffatome der Benzolringe und der an diese Kohlenstoffatome gebundenen Wasserstoffatome (Aromaten-Gehalt), 1 bis 2,5 beträgt, und mit Acetessigsäurealkylester, deren Alkylgruppen Methyl-, Ethyl-, n-Propyl-, i-Propyl-, n-Butyl-, i-Butyl- oder sec.-Butylgruppen sind, blockierten aliphatischen und/oder cycloaliphatischen Polyisocyanaten mit einer durchschnittlichen Funktionalität von mindestens 2,5 enthaltenden Lacks zur Herstellung einer Steinschlagschutzschicht mit einer Trockenfilmschichtdicke von 15 bis 50 µm zwischen der üblichen Grundierung und der Farb-Decklackierung.

Der erfindungsgemäß verwandte Steinschlagschutzschicht-Lack wird durch Herstellen einer Dispersion aus seinen Komponenten, wobei die Pigmente in die filmbildenden hydroxylgruppenhaltigen Polyester bei Temperaturen von über etwa 40°C, vorzugsweise über etwa 60°C eindispergiert und danach bei Temperaturen unter etwa 45°C die blockierten Polyisocyanate und gegebenenfalls sonstigen Zusatzstoffe eingerührt werden, erhalten.

Der Steinschlagschutzschicht-Lack wird in der Regel auf Kraftfahrzeugkarosserie-Oberteile aufgebracht, nachdem diese in üblicher Weise grundiert wurden. Bevorzugt ist eine sogenannte EC-Grundierung (Elektrocoating-Lackierung). Sie enthält anneutralisierte, in Wasser dispergierte Bindemittel, hergestellt z. B. auf Basis natürlicher oder synthetischer Maleinatöle, saurer Polyester oder Acrylatharze oder Amino-Epoxidharze, wie sie z. B. in DE-A-2 737 174, DE-A-2 824 418, EP-A-04 090 und DE-A-3 122 641 beschrieben sind, in Kombination mit Pigmenten und Füllstoffen.

Durch Eintauchen des zu beschichtenden Werkstückes, z. B. einer Automobil-Karosserie, in die wäßrige Dispersion und Anlegen einer elektrischen Spannung von 100 bis 400 Volt scheidet sich der Lack je nach Bindemittel-Typ entweder an der Anode oder an der Kathode ab. Anschließend wird der so applizierte Lackfilm bei Temperaturen von z. B. 160 bis 200°C eingebrannt. Es können auch mehrschichtige Grundierungen vorliegen. Darauf wird der Steinschlagschutzschicht-Lack gemäß der Erfindung aufgebracht.

Die gemäß der Erfindung verwendeten hydroxylgruppenhaltigen Polyester verden in an sich bekannter Weise durch Polykondensation von Säuren mit Alkoholen hergestellt. Als Säuren werden diejenigen verwendet, wie sie zur Herstellung von hydroxylgruppenhaltigen Polyestern eingesetzt werden, die als Bindemittel für die Automobilindustrie dienen. Die Hauptkomponente sind Benzolcarbonsäuren, die im Gemisch mit aliphatischen und/oder cycloaliphatischen Dicarbonsäuren, gegebenenfalls auch im Gemisch mit Dicarbonsäuren eingesetzt werden. Als Benzolcarbonsäuren können Mono-, Di- und gegebenenfalls Tri- und Tetracarbonsäuren verwendet werden. Bevorzugt sind Benzoldicarbonsäuren, d. h. Phthalsäure und deren Isomeren (Isophthalsäure, Terephthalsäure und deren Methylester bzw. Anhydride). In geringen Mengen können zusätzlich Trimellithsäure und/oder Pyromellithsäure eingesetzt werden. Große Mengen dieser Säuren sind nicht bevorzugt, weil dann eine zu starke Vernetzung eintritt. Außerdem sind diese Säuren relativ schwer zugänglich und deshalb teuer. Als aromatische Monocarbonsäuren sind z. B. Benzoesäure und p-tert.-Butylbenzoesäure geeignet.

Als aliphatische oder cycloaliphatische Dicarbonsäuren bzw. deren Anhydride sind z. B. Sebazinsäure, Azelainsäure, Adipinsäure, Maleinsäure, Fumarsäure, Itaconsäure, die Isomeren der Tetra- und Hexahydrophthalsäure, dimere und trimere Fettsäuren geeignet.

Als Monocarbonsäuren kommen sowohl aliphatische als auch aromatische Verbindungen in Frage. Besonders geeignete Monocarbonsäuren sind z. B. Pelargonsäure, Isonansäure, 2-Ethylhexansäure, Kokosvorlauffettsäure, natürlich, in Form von Ölen und Fetten vorkommende Säuren, z. B. Leinölfettsäure, Sojafettsäure, Rizinusfettsäure, Kokosfettsäure sowie chemische Derivate dieser Fettsäuren, z. B. Rizinenfettsäure. Anstatt der Fettsäuren können auch die Öle oder Fette für die Herstellung dieser speziellen Polyester verwendet werden.

Als Alkohole werden ebenfalls die auf diesem technischen Gebiet bekannten aliphatischen und/oder cycloaliphstischen Polyole mit 2 bis 4 Hydroxylgruppen pro Molekül eingesetzt. Beispiele hierfür sind Butandiol-1,2, Butandiol-1,3, Butandiol-1,4, Neopentylglykol, Ethylenglykol, Propandiol-1,2, Propandiol-1,3, Di-und Triethylenglykol, Polyethylenglykole mit Molekulargewichten bis 2000, Di- und Tripropylenglykol - abgeleitet von Propandiol-1,2, von letzterem abgeleitete Polypropylenglykole mit Molekulargewichten bis 2000, Glyzerin, Trimethylolpropan, Hexandiol-1,6, Polycaprolactonpolyole mit Molekulargewichten bis 2000, Pentaerythrit, Dipentaerythrit, Hydroxypivalinsäureneopentylglykolester, 2-Ethylhexandiol-1,3, Rizinusöl, Trimethylolethan, Trimethylpentandiol-1,3, Fettsäuremonoglyzeride.

Wesentlich für die Erfindung ist, daß die Polyester eine mittlere Hydroxylfunktionalität von 2,5 bis 6 aufweisen. Darunter wird verstanden, daß im statistischen Mittel jedes Polyestermolekül 2,5 bis 6 Hydroxylgruppen aufweist. Polyester mit einer derartigen Hydroxylfunktionalität werden durch Auswahl der Carbonsäuren und Polyole und deren Funktionalität in für den Fachmann bekannter Weise erhalten. Die prinzipiellen Grundlagen für die Herstellung und Berechnung von Alkyd- und Polyesterharzen sind ausführlich beschrieben in: T. C. Patton, Alkyd Resin Technology, New York - London: Interscience Publ. 1962.

Ein weiteres wesentliches Erfordernis gemäß der Erfindung ist, daß die Polyester einen Hydroxylgehalt von 2 bis 6 Gew.-% aufweisen. Dieser wird zunächst als Hydroxylzahl bestimmt, wie in der Deutschen Norm vom Dezember 1971 DIN 53 240 beschrieben. Eine Division der Hydroxylzahl mit 33 liefern den Gehalt an Hydroxylgruppen in Gew.-% im Harz.

Ein weiteres wesentliches Erfordernis ist, daß die Polyester einen Gehalt an aliphatischen Gruppen, die mindestens 4 bis 20 Kohlenstoffatomen in einer unverzweigten Kette enthalten, von 15 bis 50 Gew.-% aufweisen. Dieser Gehalt wird in Sinne der Erfindung als "Aliphaten-Gehalt" definiert. Bevorzugt enthalten die aliphatischen Gruppen 4 bis 18, besonders bevorzugt 4 bis 12 Kohlenstoffatome in einer unverzweigten Kette. Für die Berechung des Aliphaten-Gehalts werden aber nicht nur diese unverzweigten Ketten zugrunde gelegt, sondern auch alle direkt an diese Kette gebundenen Alkylreste, sofern solche vorliegen. Beispielsweise enthält ein Polyester, hergestellt aus den Bestandteilen

146 g Adipinsäure
148 g Phthalsäureanhydrid
408 g Pentaerythrit
534 g p-tert.-Butylbenzoesäure
432 g 2-Ethylhexansäure,

wobei bis zu einer Säurezahl von weniger als 2 kondensiert wurde, 23,4 Gew.-% Aliphaten und 20,2 Gew.-% Aromaten. Das Gewichtsverhältnis von Aliphaten- zu Aromatengehalt beträgt 1,16.

Ein weiteres Erfordernis ist, daß zwischen dem Aliphaten-Gehalt und dem Aromaten-Gehalt innerhalb der Polyester ein bestimmtes Gwichtsverhältnis, nämlich von 1 bis 2,5, bevorzugt von 1 bis 2,3, besonders bevorzugt von 1 bis 2,1 eingehalten wird.

Unter Aromaten-Gehalt wird in diesem Sinne verstanden die Summe des Gewichts der Kohlenstoffatome der Benzolringe und der an diese Kohlenstoffatome gebundenen Wasserstoffatome, die im Polyester in Form von Benzolringen vorliegen.

Die Polyester haben zweckmäßig ein rechnerisches, mittleres Molekulargewicht von 500 bis 10 000, bevorzugt 500 bis 6000, besonders bevorzugt 500 bis 4000.

Diese Polyester werden im Gemisch mit den oben definierten blockierten Isocyanaten verwendet. Als blockierte Polyisocyanate können solche verwendet werden, deren Isocyanatkomponente aliphatischer und/oder cycloaliphatischer Natur ist. Solche blockierten Polyisocyanate sind Stand der Technik. So wird z. B in der DE-A-2 612 783 die Blockierung der Verbindung

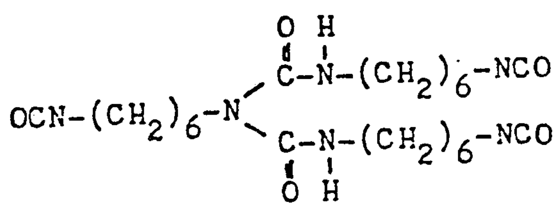

mit Acetessigsäurealkylester beschrieben. Ebenfalls für die Herstellung der erfindungsgemäßen Steinschlagschutzschicht-Lacke geeignete blockierte Polyisocyanate sind solche, deren Herstellung in der DE-A-2 550 156 beschrieben ist, sofern als Blockierungsmittel mit gegenüber Isocyanatgruppen reaktiven Methylengruppen Acetessigsäure alkylester verwendet werden und die mittlere Funktionalität der verwendeten Isocyanatverbindung mindestens 2,5 beträgt.

Weitere Patentschriften, welche die Herstellung von blockierten Polyisoacyanaten beschreiben, wie sie für die Herstellung der erfindungsgemäßen Steinschlagschutzschicht-Lacke verwendet werden; sind DE-A-2 623 081, DE-A-2 639 491 und DE-A-2 640 295. Ferner können auch blockierte Polyisocyanate, deren Herstellung in der DE-A-3 001 060 beschrieben ist, verwendet werden, sofern als Blockierungsmittel Acetessigsäurealkylester eingesetzt wird und das über Isocyanuratring(e) oligomerisierte Diisocyanat aliphatischer und/oder cycloaliphatischer Natur ist.

Steinschlagschutzschitchten mit diesen Polyestern lassen sich besonders gut mit Füllern überlackieren. Dies

kann, wie dies auf diesem technischen Gebiet bekannt ist, auch naß-in-naß erfolgen.

Für schleifbare Steinschlagschutzschichten mit Füllereigenschaften, welche direkt mit Decklack überlackiert werden, ist es bevorzugt, daß die gemäß der Erfindung verwendeten Polyester eine Hydroxylfunktionalität von über 3,5, bevorzugt über 4,5 aufweisen, und daß das Verhältnis von Aliphaten-Gehalt zu Aromaten-Gehalt unter 1,8, bevorzugt unter 1,5 liegt.

Das Mengenverhältnis zwischen Polyester und blockiertem Isocyanat ist zweckmäßig so zu wählen, daß auf ein Äquivalent Hydroxylgruppen mindestens 0,5 Äquivalente und höchstens 2 Äquivalente geblockter Isocyanatgruppen kommen. Besonders bevorzugt sind 0,8 bis 1,3 Äquivalente geblockter Isocyanatgruppen der Isoyanatkomponente pro Äquivalent Hydroxylgruppen der Polyesterkomponente.

Als organische Lösungsmittel werden zweckmäßig aromatische Kohlenwasserstoffe wie Xylol, Solvesso 100 (Esso) (eingetragenes Warenzeichen), Glykolester wie Ethylglykolacetat, Ester wie Butylacetat, Alkohole wie Isopropanol, Ether wie Ethlenglykoldimethylether oder andere Lösungsmittel, welche die Bindemittel zu lösen vermögen, wobei als Lösungsmittel eine der beschriebenen Verbindungen als Einzelsubstanz oder ein Gemisch der genannten Substanzen verwendet werden kann.

Der erfindungsgemäß verwandte Steinschlagschutzschicht-Lack enthält auf 100 Gew.-Teile Bindemittel, d. h. Gesamtmenge von Polyester und blockiertem Isocyanat, etwa 10 bis 50 Gew.-Teile Lösungsmittel, vorzugsweise etwa 15 bis 35 Gew.-Teile Lösungsmittel.

Außerdem enthält der Steinschlagschutzschicht-Lack die üblichen Additive, wie Siliconöle oder niedermolekulare Acrylpolymere (Verlaufsmittel), Pigmentbenetzungsmittel (Sojalecitin), Epoxidharze, Weichmacher (Palatinol C, eingetragenes Warenzeichen), Füllstoffe wie Schwerspat, Kaolin, Talkum; Thixotropierungsmittel wie, Aerosil, Bentone (beide eingetragene Warenzeichen); Katalysatoren wie Zinkorganische Verbindung.

Weiterhin enthält der Lack Pigmente, um einen gewünschten Farbton oder Deckkraft zu erzielen. Wie eingangs erwähnt wurde, sind besonders erwünscht solche Steinschlagschutzschichten, die eine zusätzliche Füllerschicht überflüssig machen, und auf die unmittelbar die Endlackierung des Kraftfahrzeugs aufgebracht werden kann. Da durch Steinschlag leicht der Decklack beschädigt und herausgeschlagen wird, ist es erwünscht, daß die Steinschlagschutzschicht die gleiche Pigmentierung wie der Decklack oder zumindest einen ähnlichen Farbton aufweist, zweckmäßig farbige Pigmente zur Erzielung eines gelben, roten, grünen oder blauen Farbtons enthält, die dem Farbton des gewünschten Farbtons entsprechen. Bekanntlich werden Kraftfahrzeuge häufig in leuchtenden Farben lackiert. Die hierzu verwendeten Pigmente sind häufig schwer dispergierbar, d. h. zum Eindispergieren dieser Pigmente in das Bindemittel müssen Temperaturen von mindestens etwa 40°C über lange Zeiträume von z. B. mehr als 20 oder 30 Minuten angewandt werden. Dies ist jedoch nicht möglich, wenn als Bindemittel der Gemische oder Präaddukte von hydroxylgruppenhaltigen Polyestern und blockierten Polyisocyanaten eingesetzt werden, weil diese bei den Vermahl- bzw. Dispergiertemperaturen von über etwa 40°C mindestens teilweise reagieren. Es wurde gefunden, daß dieses Problem in überraschend einfacher Weise gelöst werden kann, wenn der erfindungsgemäß verwandte Steinschlagschutzschicht-Lack hergestellt wird, daß die Pigmente in die filmbildenden hydroxylgruppenhaltigen Polyester bei Temperaturen von über etwa 40°C, vorzugsweise über etwa 60°C eindispergiert werden, und daß erst danach bei Temperaturen unter etwa 45°C die Polyisocyanate eingerührt werden. Das Verfahren kann in vorzüglicher Weise mit äußerst schwer dispergierbaren Pigmenten durchgeführt werden, die z. B. bei Temperaturen von über etwa 40°C, sogar über etwa 60°C eindispergiert werden müssen. Da das Einrühren der Polyisocyanate in kurzer Zeit beendet ist, können hierfür kurzfristig auch Temperaturen bis etwa 50°C eingesetzt werden. Wichtig ist, daß die fertigen Lacke möglichst bald auf Raumtemperatur abgekühlt werden. Sie besitzen jedoch eine ausgezeichnete Lagerstabilität auch bei Temperaturen über 25°C. Sie sollten aber über längere Zeiträume von mehreren Wochen oder Monaten nicht bei Temperaturen über etwa 35°C gelagert werden. Versuche haben ergeben, daß die Lacke gemäß der Erfindung bei einer Testtemperatur von 32°C mehr als 3 Wochen gelagert werden können, ohne daß ein merklicher Anstieg in der Viskosität zu beobachten wäre.

Eine Dispergierung der Pigmente bei erhöhten Temperaturen ist notwendig, um einen guten Verlauf des Lackes und einen guten Decklack-Stand zu erzielen. Beispiele für schwer dispergierbare Pigmente sind Antrachinon-, Molybdat, Eisenoxid-, Phthalocyanin-Pigmente.

Der erfindungsgemäß verwandte Lack wird zur Erzielung von Steinschlagschutzschichten geringer Stärke, insbesondere einer Trockenfilm-Schichtdicke von 15 bis 50 µm eingesetzt. Bevorzugt ist eine Trockenfilm-Schichtdicke von 20 bis 45 µm. Die Applikation des Lackes gemäß der Erfindung erfolgt in üblicher Weise z. B. durch Spritzen, Airless-Spritzen, elektrostatisches Versprühen. Der Lack wird anschließend eingebrannt, wobei relativ niedrige Temperaturen angewandt werden können. Wenn anschließend keine weitere Schicht naß-in-naß aufgebracht wird, kann bei Temperaturen von etwa 120 bis 180°C eingebrannt werden, wobei im allgemeinen eine Temperaturobergrenze von weniger als 160°C, vorzugsweise weniger als 140°C und sogar weniger als 130°C ausreichend sind. Dies sind extrem niedrige Einbrenntemperaturen für Steinschlagschutzschichten.

Die, Einbrennzeiten liegen unter 60 Minuten, zweckmäßig unter 40 Minuten, bevorzugt unter 30 Minuten. Es kann z. B. bei etwa 120°C während 20 bis 25 Minuten eingebrannt werden. Derartig niedrige Einbrenntemperaturen sind auch dann vorteilhaft, wenn anschließend mit einem üblichen Füller lackiert wird. Die Füller des Stands der Technik können bei sehr niedrigen Temperaturen eingebrannt werden und sie werden, wie bereits erwähnt, zweckmäßig naß-in- naß aufgetragen, damit Steinschlagschutzschicht und Fülle

in einem einzigen Vorgang eingebrannt werden können.

**Herstellungsbeispiel A**

503 g eines Umsetzungsproduktes von 3 Mol Hexamethylendiisocyanat und einem Mol Wasser (Desmodur N, 100 %, eingetragenes Warenzeichen) werden in 218 g Ethylglykolacetat gelöst und bei 80°C mit 376 g Acetessigsäureethylester um gesetzt, bis ein Isocyanatgehalt der Lösung von weniger als 0,1 % erreicht ist. Zur Beschleunigung der Verkappung können 1 g Zinkacetylacetonat zugesetzt werden.

**Herstellungsbeispiel B**

In einem Reaktionsgefäß, ausgerüstet mit Rührer, Abscheider und Kolonne, werden

| | |
|---|---|
| 1390g | Hexandiol-1,6 |
| 395g | Trimethylolpropan |
| 550g | Adipinsäure |
| 978g | Isophtalsäure |
| 313g | Phthalsäureanhydrid |

eingewogen und bei etwa 200°C nach an sich bekannten Verfahren des Standes der Technik so lange kondensiert, bis der Restsäuregehalt des Festharzes unterhalb 1 mg KOH pro Gramm Harz (Bestimmung nach DIN 53 402) liegt. Danach wird mit 1389 g Ethylglykolacetat verdünnt. Das Festharz hat folgende charakteristischen Werte:

| | |
|---|---|
| Aliphatengehalt | = 37.06 Gew.-% |
| Verhältnis von Aliphaten- zu Aromatengehalt | = 1,97 |
| Hydroxylgehalt (bei SZ = O) | = 4,6 Gew.-% |
| Hydroxylfunktionalität (bei SZ = O) | = 3,0 |
| (SZ Säurezahl) | |

**Herstellungsbeispiel C**

Entsprechend der Verfahrensweise von Herstellungsbeispiel B wird ein Polyesterharz unter Verwendung folgender Bestandteile hergestellt:

| | |
|---|---|
| 891g | Hexandiol-1,6 |
| 810g | Trimethylolpropan |
| 1254g | Isophthalsäure |
| 441g | Adipinsäure |
| 224g | Phthalsäureanhydrid |

Die Kondensation wird bei einem Restsäuregehalt von 6 mg KOH pro Gramm Harz abgebrochen, wonach mit 1377 g Ethylglykolacetat verdünnt wird. Das Festharz hat folgende charakteristische Werte:

| | |
|---|---|
| Aliphatengehalt | = 25,03 Gew.-% |
| Verhältnis von Aliphaten- zu Aromatengehalt | = 1,17 |
| Hydroxylgehalt (bei SZ = 6) | = 5,0 Gew.-% |
| Hydroxylfunktionalität (bei SZ = 6) | = 5,1 |

**Beispiel 1**

Ein Steinschalgschutzschicht-Lack wurde aus folgenden Komponenten hergestellt:

| | | |
|---|---|---|
| 30,0 | g | hydroxylgruppenhaltiger Polyester (Herstellungsbeispiel B) |
| 0,5 | g | feinverteiltes Siliciumdioxid (Aerosil, eingetragenes Warenzeichen) |
| 1,0 | g | Ruß |
| 4,0 | g | Titandioxid (Rutil) (Pigment) |
| 29,0 | g | Bariurmsulfat (Füllstoff) |
| 3,0 | g | Butylacetat |
| 23,4 | g | Polyisocyanat gemäß Herstellungsbeispiel A |
| 5,5 | g | Butylacetat |

Zunächst wurden alle Bestandteile mit Ausnahme der letzten zwei Komponenten zur Erzielung eines guten Verlaufs der Lacke bei etwa 60° C zur Eindispergierung der Pigmente und Füllstoffe in das Bindemittel in einer Perlmühle gemahlen. Das Mahlgut wurde dann der Perlmüle entnommen, und es wurden die letzten zwei Komponenten bei etwa 40° C eingerührt. Die erhaltenen Ergebnisse sind nachfolgend zusammengestellt.

Die Lackformulierung von Beispiel 1 wurde mit einem Gemisch aus 2 Gew.-Teilen Ethylglykolacetat und 1 Gew.-Teil Gemisch von aromatischen Kohlenwasserstoffen (Solvesso 100, eingetragenes Warenzeichen) auf eine Viskosität von 40 s bei 20° C im AK4-Becher eingestellt. Der Lack wurde auf elektrotauchlackierte, phosphatierte Stahlbleche aufgespritzt und mit einem handelsüblichen Füller naß-in-naß überlackiert. Beide Lackschichten wurden zusammen in einem Umluftofen, wie in Tabelle 1 angegeben, gehärtet. Danach wurde ein handelsüblicher Declklack aufgespritzt und während 15 Minuten bei 130° C gehärtet.

| | | |
|---|---|---|
| Trockenfilmdicken: | Elektrotauchlack-Schicht | 20 µm |
| | Steinschlagschutz-Schicht | 20 µm |
| | Füllerschicht | 20 µm |
| | Decklackschicht | 35 µm |

Die Steinschlag-Tests wurden mit einem Steinschlagprüfgerät nach VDA (Verband der Automobilindustrie) durchgeführt, hergestellt von der Firma Erichsen, Modell Nr. 508.

Die Prüfbedingungen waren:

| | |
|---|---|
| Kesselvordruck | 4,5 bar |
| Düsendruck | 1,0 bar |
| Stahlschrotmenge | 500 g |
| Beschußzeit | 5 s |

**Tabelle 1**

| Einbrenn-Bedingung für Steinschalgschutz-/Füller-schicht "naß-in-naß" | Bewertung nach DIN 53 230 Beispiel 1 |
|---|---|
| 20 Minuten 125° C | 1 |
| 20 Minuten 140° C | 1 |

Bewertet wurde die Menge der abgeplatzten Lackschicht, ausgedrückt in Kennzahlen nach DIN 53 230.

Die Lagerstabilität wurde durch Viskositätsmessung während der Lagerung der Lacke bei 32° C ermittelt. Dabei wurden die Lackformulierung von Beispiel 1 sowie die entsprechende reine Binedemittelkombination (Klarlack) geprüft.

| Viskosität nach Tagen (mPas/20°C) | Beispiel 1 (mit Pigmenten) | Beispiel 1 (ohne Pigmente) |
|---|---|---|
| 0 | 390 | 2600 |
| 4 | 390 | 2500 |
| 11 | 390 | 2300 |
| 21 | 390 | 2450 |
| 28 | 390 | 2200 |
| 48 | 395 | 2160 |

Meßgerät: Rotovisko RV21 (Haake), Meßkopf 500
Meßsystem: Becher, Drehkörper MV I Die Viskosität wurden bei folgenden Geschwindigkeitsgefällen D($s^{-1}$) ermittelt:
58 $s^{-1}$ für den Klarlack (ohne Pigmente)
115 $s^{-1}$ für den Steinschlagschutzlack (mit Pigmenten)

**Beispiel 2**

Es wurde wie in Beispiel 1 beschrieben gearbeitet unter Verwendung folgender Komponenten:

| | |
|---|---|
| 24,85 g | hydroxylgruppenhaltiger Polyester (Herstellungsbeispiel C) |
| 1,34 g | Verlaufsmittel (Acronal 700L, 10 % in Xylol, eingetragenes Warenzeichen) |
| 5,12 g | Thixotropierungsmittel (Bentone 38, 10 %-iger Aufschluß, eingetragenes Warenzeichen) |
| 5,12 g | Titandioxid (Bayertitan RKB-2, eingetragenes Warenzeichen) |
| 0, 52 g | Eisenoxid-Pigment (Bayferrox 303 T, eingetragenes Warenzeichen) |
| 17,1 g | Bariumsulfat (Blancfixe N, eingetragenes Warenzeichen |
| 0,67 g | feinverteiltes Silicumdioxid (Aerosil 200, engetragenes Warenzeichen) |
| 20,87 g | Polyisocyanat gemäß Herstellungsbeispiel A |

Das nach Vermahlen bei 60°C und Einmischen des Polyisocyanats bei etwa 40°C erhaltene Gemisch wurde mit einem Gemisch aus 2 Gew.-Teilen Ethylglykolacetat und 1 Gew.-Teil Gemisch von aromatischen Kohlenwasserstoffen (Solvesso 100, eingetragenes Warenzeichen) auf eine Viskosität von 40 s im AK4-Becher eingestellt (20°C).

Die Lackformulierung von Beispiel 2 entspricht bezüglich der eingesetzten Pigment und Füllstoffe sowie hinsichtlich des Pigment/Bindemittelverhältnissen typischen Füllerformulierungen nach dem Stand der Technik. Der Lack gemäß Beispiel 2 ergibt also eine schleifbare Steinschlagschutzschicht mit Füllereigenschaften, die direkt mit Decklack überlackiert werden kann. Der Lack wurde auf ein elektrotauchlackiertes, phosphatiertes Stahlblech aufgespritzt und während 20 Minuten bei 125°C ausgehärtet (Trockenfilmdicke 30 µm). Die resultiernde Lackschicht wurde hinsichtlich ihrer Oberflächenhärte mittels eines Erichsen-Pendelhärtemeßgerätes (Pendelhärte nach König) geprüft und mit Schleifpapier der Körnung 600 auf Naßschleifbarkeit getestet (das Schleifpapier darf sich nicht mit Schleifschlamm zusetzten).

| Prüfung | Beispiel 2 |
|---|---|
| Steinschalgtest (wie Beispiel 1) | 1 - 2 |
| Schleifbarkeit | ja |
| Lagerstabilität (gemessen wie Beispiel 1) | Viskosität ist konstant |
| Pigmentbarkeit bei 60 - 80°C | uneingeschränkt möglich |
| Pendelhärte (nach König) | 155 s |

**Beispiel 3**

Ein Steinschalgschutzschicht-Lack wurde aus folgenden Komponenten hergestellt:

621 g Polyester (wie Beispiel 2)
760 g Titandioxid RN 59 der Firma Kronos
40 g Sicotransrot L 2817 (Hersteller: BASF, eingetr. Wz)
10 g feinverteiltes Siliciumdioxid
537 g Polyisocyanat (Herstellungsbeispiel A)

Die ersten vier Komponenten wurden zusammen mit 1000 g Glasperlen (2 mm Durchmesser) in einer Laborperlmühle (Firma DRAIS, Typ PM 1) während 30 Minuten bei 70°C dispergiert. Das Material wurde anschließend von den Glasperlen abgetrennt, auf etwa 45°C abgekühlt und mit der restlichen Komponente vermischt und mittels Ethylglykolacetat auf eine AK4-becher Auslaufzeit von 40 Sekunden bei 20°C eingestellt.

**Vergleichsbeispiel**

Es wurde wie in Beispiel 3 gearbeitet, jedoch bei 45°c dispergiert. Um die Farbstärke von Beispiel 3 zu erreichen, mußte mehr als 60 Minuten dispergiert werden. Dann wurde die fünfte Komponente zugesetzt.

Für die Farbstärkemessung (DIN 53 238) wurden die Lacke von Beispiel 3 und Vergleichsbeispiel durch Spritzen auf ein mit Elektrotauchlack grundiertes phosphatiertes Stahlblech appliziert und bei 130°C während 20 Minuten eingebrannt, wobei eine Trockenfilmdicke von etwa 40 µm resultierte.

**Patentansprüche**

1. Verwendung eines Pigmente, Füllstoffe, organische Lösungsmittel, sowie übliche Lackzusatzstoffe und als Bindemittel ein Gemisch aus filmbildende hydroxylgruppenhaltigen verzweigten Polyestern, die erhältlich sind aus Benzolcarbonsären sowie aliphatischen und/oder cycloaliphatischen Dicarbonsäuren, gegebenenfalls im Gemisch mit Mnocarbonsäuren, sowie aliphatischen und/oder cycloaliphatischen Polyolen mit 2 bis 4 Hydroxylgruppen pro Molekül, wobei die Polyester eine mittlere Hydroxylfunktionalität von 2,5 bis 6, einen Hydroxylgehalt von 2 bis 6 Gew.-%, und einen Gehalt an aliphatischen Gruppen, die mindestens 4 bis 20 Kohlenstoffatome in einer unverzweigten Kette enthalten, von 15 bis 50 Gew.-% (Aliphaten-Gehalt) aufweisen, und wobei das Gewichtsverhältnis von dem Gehalt an diesen im Polyester vorliegenden aliphatischen Gruppen dem Gehalt an im Polyester vorliegenden Benzolringen, gerechnet als Summe des Gewichts der Kohlenstoffatome der Benzolringe und der an dies Kohlenstoffatome gebundenen Wasserstoffatome (Aromaten-Gehalt), 1 bis 2,5 beträgt, und mit Acetessigsäurealkylestern, deren Alkylgruppen Methyl-, Ethyl-, n-Propyl-, i-Propyl-, n-Butyl-, i-Butyl- oder, sec.-Butylgruppen sind, blockierten aliphatischen und/oder cycloaliphatischen Polyisocyanaten mit einer durchschnittlichen Funktionalität von mindestens 2,5 enthaltenden Lacks zur Herstellung einer Steinschlagschutzschicht mit einer Trockenfilmschichtdicke von 15 bis 50 µm zwischen der üblichen Grundierung und der Farb-Decklackierung.

2. Verwendung nach Anspruch 1, dadurch gekennzeichnet, daß der Lack naß-in-naß mit einem Füller überlackiert und mit diesem gemeinsam eingebrannt wird.

3. Verwendung nach Anspruch 2, dadurch gekennzeichnet, daß der farbige Pigmente enthaltende Lack unmittelbar mit, einem farbigen Decklack lackiert wird.

**Claims**

1. The use of a lacquer containing pigments, fillers, organic solvents and also standard lacquer additives and, as binder, a mixture of film-forming, hydroxyl-group- containing branched polyesters obtainable from benzenecarboxylic acids and aliphatic and/or cycloaliphatic dicarboxylic acids, optionally in admixture with monocarboxylic acids, and aliphatic and/or cycloaliphatic poluols containing 2 to 4 hydroxyl groups per molecule, the polyesters having an average hydroxyl functionality of 2,5 to 6, a hydroxyl content of 2 to 6 % by weight and a content of aliphatic groups containing at least 4 to 20 carbon atoms in an unbranched chain of 15 to 50 % by weight (aliphatic content) and the ratio by weight of the content of aliphatic groups in this polyester to the content of benzene rings in the polyester, expressed as the sum of the weight of the carbon atoms of the benzene rings and the hydrogen atoms attached to these carbon atoms (aromatic content), being from 1 to 2,5, and aliphatic and/or cycloaliphatic polyisocyanates blocked with acetoacetic acid alkylesters, of which the alkyl groups are methyl, ethyl, n-propyl, i-propyl, n-butyl, i-butyl or sec. -butyl groups, and having an average functionality of at least 2,5 for the production of a chip-resistant layer in a dry film layer thickness of 15 to 50 µm between the usual primer and the coloured surface coat.

2. The use claimed in claim 1, characterized in that the lacquer is overlacquered wet-in-wet with a filler and is stoved together therewith.

3. The use claimed in claim 2, characterized in that the lacquer containing coloured pigments is immediately

lacquered with a coloured surface lacquer.

## Revendications

1. Utilisation d'une peinture contenant des pigments, des matières de charge, des solvants organiques et des additifs usuels pour peintures et vernis et, en tant que liant, un mélange de polyesters filmogènes ramifiés contenant des groupes hydroxy, obtenus à partir d'acides benzène-carboxyliques et d'acides dicarboxyliques aliphatiques et/ou cycloaliphatiques, éventuellement en mélange avec des acides monocarboxyliques, et de polyols aliphatiques et/ou cycloaliphatiques contenant 2 à 4 groupes hydroxy par molécule, les polyesters ayant une fonctionnalité moyenne en groupes hydroxy de 2,5 à 6, une teneur en groupes hydroxy de 2 à 6 % en poids, et une teneur en groupes aliphatiques contenant au moins 4 à 20 atomes de carbone dans une chaîne droite, de 15 à 50 % en poids (teneur en aliphatiques), avec un rapport en poids entre la teneur de ces groupes aliphatiques existant dans le polyester et la teneur en cycles benzéniques existant dans le polyester, exprimée par la somme du poids des atomes de carbone des cycles benzéniques et des atomes d'hydrogène fixés sur ces atomes de carbone (teneur en aromatiques) de 1 à 2,5, et de polyisocyanates aliphatiques et/ou cycloaliphatiques bloqués par des acétylacétates d'alkyle dont les groupes alkyle sont des groupes méthyle, éthyle, n-propyle, isopropyle, n-butyle, isobutyle ou sec-butyle, à une fonctionnalité moyenne d'au moins 2,5, pour l'application d'une couche de protection contre les jets de pierres à une épaisseur de pellicule sèche de 15 à 50 µm entre la couche d'apprêt habituelle et la couche de peinture de couverture colorée.

2. Utilisation selon la revendication 1, caractérisée en ce que la peinture est recouverte, humide- sur-humide, d'un mastic et cuite avec ce dernier.

3. Utilisation selon la revendication 2, caractérisée en ce que la peinture, contenant des pigments colorés, est recouverte directement d'une peinture de couverture colorée.